# EUROPEAN PATENT APPLICATION

(11) **EP 3 819 836 A1**
(43) Date of publication of application: **12.05.2021**
(21) Application number: 20178746.2
(22) Date of filing: 08.06.2020
(51) Int. Cl.: G06Q 10/06, G06F 16/80

(54) **SECURE AUTOMATION METHODS AND SYSTEMS**

(30) Priority: 08.11.2019 GB 201916251
(71) Applicant: Nivaura Ltd., London, Greater London EC2V 6DN (GB)
(72) Inventor: Dr. Avtar SINGH SEHRA, London, EC2V 6DN (GB)
(74) Representative: ip21 Ltd

(57) **Abstract**

A computer-implemented method for execution flow generation, the method comprising the steps of:
providing a machine-readable input document;
reading the input document to detect a first plurality of parameters representing tag data;
structuring the tag data to provide structured data; and
converting the structured data into execution flow.

## Description

### Technical Field

Aspects of the present invention generally relate to secure automation methods and systems. In particular, aspects of the present invention relate to developing adaptable and intelligent execution flows for secure automation tools that can manage exceptions (i.e. failures) safely and avoid such exceptions occurring in the future.

### Background

Automation tools, such as machine learning and smart contracts are well known across a breadth of technology areas. Such technology areas include aeronautical, medical or digital services sectors to name only a few examples. Automation tools represent pieces of technology which interact with humans. It is desirable that such tools provide relevant feedback, and thus augment and improve abilities to achieve desired outcomes. Accordingly, automation does not necessarily remove human input, but seeks to maximise probability of achieving correct outcomes as efficiently and effectively as possible. Good system design requires good human-technology interaction.

Feedback and exception or failure management is fundamental in automation and is core to good system design. In some cases, failure is unpredictable, as has been seen in some of the biggest automation failures across aeronautical and medical sectors. In such cases, it is important to have adaptable execution flows, also referred to as 'workflows'. An example of such adaptable workflow includes switching over to a manual failsafe process to ensure that the people and systems relying on the workflow are protected.

Building highly automated solutions that can adapt and learn from failures requires a deep understanding of the processes being automated and ensuring that workflows are designed and developed in a flexible and intelligent manner. This means not shoehorning automation technology like machine learning and smart contracts to only "optimise and automate" manual activities, but building flexible systems that have breadth and depth to be useful and secure in real world applications.

Aspects of the present invention seek to enable the development of such adaptable and intelligent workflows for secure automation tools.

### Summary of the invention

According to a first independent aspect of the invention, there is provided a computer-implemented method for execution flow generation, the method comprising the steps of:
providing a machine-readable input document;
reading the input document to detect a first plurality of parameters representing tag data;
structuring the tag data to provide structured data; and
converting the structured data into execution flow.

In a dependent aspect, the machine-readable input document is a template document. That is, a text document has been marked-up in a markup language.

The markup language used in the examples described below is denominated General-purpose Legal Markup Language (GLML).

This enables any input document to be structured and automated, utilising any editing tool. In this way, the structured documents can be human-readable, meaning markup files contain standard words, rather than typical programming syntax. This ensures users can maintain the documents themselves, with key content and data being accessible for multiple purposes e.g. workflow automation, machine learning, data aggregation etc.

In a dependent aspect, reading the input document comprises a machine learning process. This ensures that the switchover or failsafe process is designed in such a way to provide a learning mechanism for exceptions (i.e. failures). Advantageously, if such failures occur again in the future, they can potentially be managed automatically in an efficient manner. Preferably, the reading step includes a validation process ('debugging') where required.

In a dependent aspect, structuring the tag data comprises grouping the first plurality of parameters into a second plurality of parameters representing grouped tag data. The grouped tag data is also referred to as a data structure. The tag data may be divided in groups and sub groups (i.e. in a hierarchy of data).

Advantageously, the process can maps the data structure to execution flow for an external service to provide automated, flexible systems that can manage exceptions. For example, the mapping can define which condition can or cannot be used for the execution flow to be generated. When a settlement instrument is generated for example, this can be sent to a clearing system. The method enables easy switching between issuance on existing clearing systems and blockchain based systems.

In a dependent aspect, structuring the tag data comprises a machine learning process and/or a heuristic process.

In a dependent aspect, the step of structing the tag data comprises validating the structured data. For example, the validation may be carried out by a template engine.

In a dependent aspect, the method further comprising the steps of: providing values for the first plurality of parameters and generating an output document using the generated execution flow.

Advantageously, a document only needs to be uploaded to a processing platform once, and can then be used repeatedly, with the only input required being for example simple user assigning of values to the tags. A final complete document can thus be generated quickly and efficiently. Advantageously, the method streamlines and automates the conversion of a template document into a final, accurate and complete document.

According to a second independent aspect of the invention, there is provided a system comprising:
a processor;
a memory in communication with the processor, the memory storing instructions which, when executed by the processor, cause the processor to perform the method according to the first independent aspect.

In dependent aspects, the system is a clearing system or an on-boarding system which may or may not integrate with a blockchain. Methods and systems as described above may be used in a variety of applications including digital platform services in capital markets.

It will be appreciated that the described methods may be performed on any suitable processing system, including hardware or firmware. In some cases, each step may be performed by a module in a system.

Additionally or alternatively, any of the described methods may be embodied as instructions on a non-transitory computer-readable medium such that, when the instructions are executed by a suitable module within the system (such as a processor), cause the module to perform a described method.

### Brief Description of the Drawings

Aspects of the present invention will now be described, by way of example only, with reference to the accompanying figures,
Figure 1 shows a method according to an embodiment of the invention;
Figure 2 shows a preferred implementation of step S120;
Figure 3 shows a preferred implementation of step S130;
Figure 4 shows an exemplary modular system for performing the described methods.

### Detailed Description

### Data Structuring

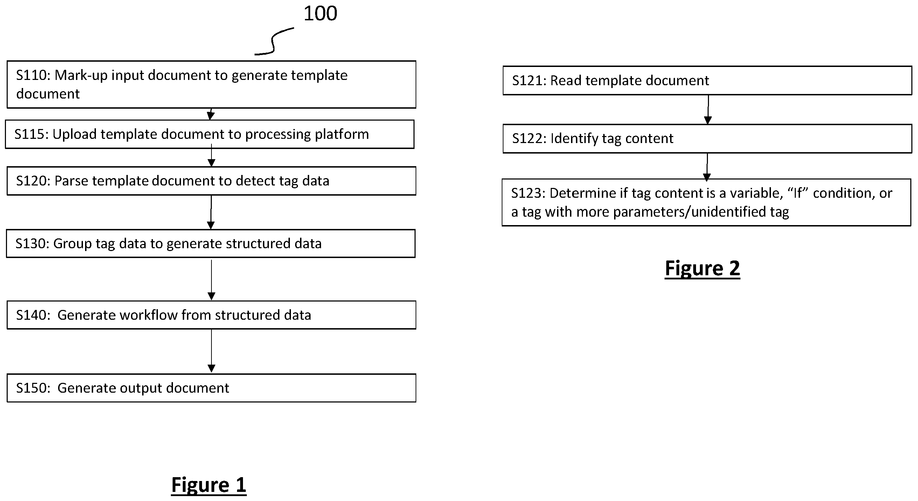

With reference to Figure 1, there is shown a computer implemented method 100 for generating execution flow.

At step S110, an input text document is marked-up to provide a template document. In this example, the input document is a legal document although it will be appreciated that any document may be used.

The template document is a machine-readable document. Templates are traditionally used by lawyers to structure legal documents. Templates have spaces or 'blobs', for the lawyer to fill out with information specific to the particular instance of the document. Templates often also have logical statements written in the footnotes such as 'Delete this section if the Interest Basis is Fixed Rate'. This is a slow and error-prone process.

In the legal domain, there have been numerous efforts to structure documents in a standard way. One of such language is Legal XML. However, this and other attempts are comparable to a coding language, with the document generation being complicated to implement and requiring a technical background. Furthermore, such attempts require the use of specialised editors that may abstract complexity.

To overcome these problems, a "markup" language is preferably used to mark-up the document. A markup language is a type of computer language that uses tags to define elements within a document. In this example, the mark up language is denominated General-purpose Legal Markup Language (GLML). While this example uses GLML for financial contracts, the language can be adapted to any form of document.

At step S115, the template document is uploaded to a processing platform. The platform in this example comprises a number of modules including, in this example, a parsing engine, a workflow controller and a template engine. It will be appreciated that further modules can be provided on top of the specified modules. The further modules may add functionalities such as, for example, machine learning techniques.

At step S120, the parsing engine parses the template document and runs a debugging process if required. In this process, the parsing engine identifies tag data. Tag data comprises a plurality of parameters referred to as 'tags' or 'fields'. Tags are variables that can contain a single value or multiple values.

Figure 2 shows an exemplary implementation of step S120, using the parsing engine. At step S121, the parsing engine reads in the content of the input document, for example with a buffer. The input document is read from its beginning to its end. If required, a debugging process is carried out. A security maximum number of iterations may be set as equal to the number of characters of the document.

At step S122, the parsing engine identifies tag content. For example, the parsing engine can search for a first string "${" and the corresponding string "}". During this process the parsing engine may log an invalid "${" or invalid "}" where a matching corresponding string is not found.

At step 123, the parsing engine determines if tag content is a variable, "If" condition, or a tag with more parameters (e.g. separated by a semicolon) or if it's a type of tag which is not recognised, that is, an unidentified tag.

If the tag content is a variable, the parsing engine formats the value of the corresponding field and inserts a value replacing the tag. During this process, the parsing engine may log fields which are not found and may remove the tag.

The tag content may have more parameters separated by semicolon. For example, these may be:
∘ Lists: count, and, or, list, bullet list, number list
∘ Currency: symbol, description
∘ Date: year, month, day

If the tag content is an "If" condition, the parsing engine checks if this condition is preceded by a second "$". The parsing engine may evaluate the condition decoding the values of the tags contained in the condition and then use a javascript engine sandbox to compute the result. The parsing engine translates "If" conditions in conditions of existence of the fields to be able to render the fields only when needed.

The type of the fields selected is preferably the most specific possible based on the tag syntax. It will be appreciated that machine learning techniques may be employed to guess the right type of the field.

Turning to Figure 1, at step S130, tag data is grouped to generate structured data, or a data structure, whereby the document data is in an organized form. The structured data may also be through of as a hierarchy of data or data template. The fields may be grouped using the titles of the chapters of the document for example.

The purpose it to map the data structure with the external service. In the case of the Bond Issuance Platform example, it is required that the data structure aligns with the desired Issuance.

In an example, the data structure is a template such as a json template containing the details of: fields (tags), selectable data and groups. The selectable data contains a list of options for each combination of fields that needs to be shown in the workflow. In envisaged embodiments, it would be possible to use selectables from an external source of data and data collections with a package and version name.

In envisaged embodiments, heuristics and machine learning techniques may be used to group the tag data.

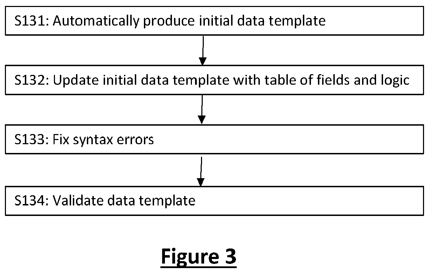

Figure 3 shows a preferred implementation of step S130. At step S131, an initial template is produced automatically. At step S132, the product manager updates the initial template, using a table of fields and logic (representing tag data), preferably with all the refinements required. For example, options for combination of fields may be added and formulas may be specified for certain fields.

At step S133, syntax errors are fixed, human interaction being allowed. For example, the output of the log messages may be presented to the user via a user interface to the allow the user to fix the syntax errors.

At step S134, the updated template produced is validated with a "structural validation of the template". This validation in this example is performed by the template engine. The structural validation checks for example that the json of the template is used. It checks if all of the required details are specified, and with the correct syntax.

Turning to Figure 1, at step 140, the workflow controller generates a workflow from the data template. The workflow controller contains the logic that allows the system to retrieve the fields to show on the front end workflow for a particular document. From the document a user wants managed, the workflow controller shows the fields of that document, divided in groups and sub groups (i.e. in a hierarchy of data).

The groups in the data structure are divided in documents (e.g. termsheet and final_terms). For each document a list of groups contained is specified. Each group may specify the key, the label and the list of fields of the group. For example, the documents a user wants to fill can be input by the user and the workflow controller can show the fields of that document, divided in groups.

The workflow controller can manage the different types of fields showing a different input type and can specify if a field must be rendered or not based on conditions of existence of the field. The field values are then saved in the data structure in which the keys are the keys of the fields.

At step S150, the workflow controller populates an output document. The workflow controller can manage the integration with the template engine to validate the values that users save on the front end.

Tags are assigned values for a specific instance of the document. The form of the value(s) that a user may assign to a tag is dependent on the tag's data-type. Data-types are different sets of rules as to what can and cannot be entered for a tag. Each tag accepts only one data-type. The GLML data types may be one of the following: Text, Number, Percent, Yes/No, Select One, Date, Currency, Money, Multi-Value Tags.

Assigning tag values may be done by a lawyer for example or by other users of the platform. For example, on a Bond Issuance Platform, the variables of Nominal Amount, Coupon Rate, Maturity Date, Covenants, Terms and Conditions, may all be subject to negotiation in a coordination and Bookbuilding process, and their values ultimately agreed upon on the platform by these parties. The agreed values are then assigned to the tags. Accordingly, the platform enables collaborative work.

Preferably, the template engine carries out validation of the values of the fields. Accordingly, in addition to the structural validation of the data structure mentioned above (in step S134), the template engine may perform a second types of validation: "validation of the values of the fields." The validation of the values of the fields checks the constraints of the fields. For example, it checks that all of the fields are "required" and, based on the type of the field, checks the format and if the value has the right domain.

Advantageously, a template document only needs to be uploaded to the processing platform once, and can then be used repeatedly, with the only input required being simple user assigning of values to the tags. If the instruments details change for example, there is no need to reprogram the front-end, the processing platform being dynamically driven.

A user may select a "Document Compiling" option, wherein the document template is read and agreed values inserted in appropriate places, producing a output document representing the compiled document. The step of compiling additionally features the processing of data structure and workflow generation described above, to align with the desired Issuance. For example, if a Fixed Rate is selected for a Bond, the Floating Rate section of a Final Terms are automatically removed from the Compiled Document. This saves time, allowing for a flexible platform that adapts output in a secure and efficient manner.

The methods enable efficient mapping of data e.g. from documents to workflow applications and from workflow to feeding legacy database schemas. Where possible, schema-less models are adopted to improve data agility.

### Example Applications

The above described methods may be used as secure automation tools for digital services which are quicker than existing processes and require minimum human interaction. Envisaged applications of the workflow automation of the type describe above are wide ranging and include for example onboarding systems and clearing systems which may or may not integrate with blockchain applications.

In a particular example, the processing platform is used to automate the new issue process for Euro Medium-Term Notes (EMTNs) and tackle its structural inefficiencies. Administration of multiple documents, interaction with infrastructure systems and settlement processes are currently fragmented and highly manual. Aiming to tackle these problems, the present platform provides secure process automation for new issue lifecycle management.

Advantageously, while dealers using the platform can retain all their functions managing relationships and interaction with issuers, the platform automates much of their activity. For example, instruments can be automatically set up in the systems of capital markets service and infrastructure providers without the need for manual intervention, and the dealer can leverage data to drive straight through processing for settlement using its internal systems. The platform's automation principles are also applicable to the broader Eurobond market, as well as areas like commercial paper and structured notes.

The methods described above in the **Data Structuring** section enable documentation workflow automation, deploying negotiation tools for MTNs and Swaps, and a fully automated engine for the generation of final terms and confirmations; as well as managing the signing process. Additional functionality may include operational tools for straight through processing such as: data transmission to Issuing and Paying Agents (IPAs) to enable registration with clearing systems; ISIN generation; and dealer data feeds for internal settlement process automation.

### Systems

The described methods may be performed on any suitable processing ssytems, including hardware or firmware. In some embodiments, each step may be performed by a module in a system.

Additionally or alternatively, any of the described methods may be embodied as instructions on a non-transitory computer-readable medium such that, when the instructions are executed by a suitable module within the system (such as a processor), cause the module to perform a described method.

Each module can be deployed as a cloud service or on servers on premises. Alternatively, the modules may be deployed as an end to end platform.

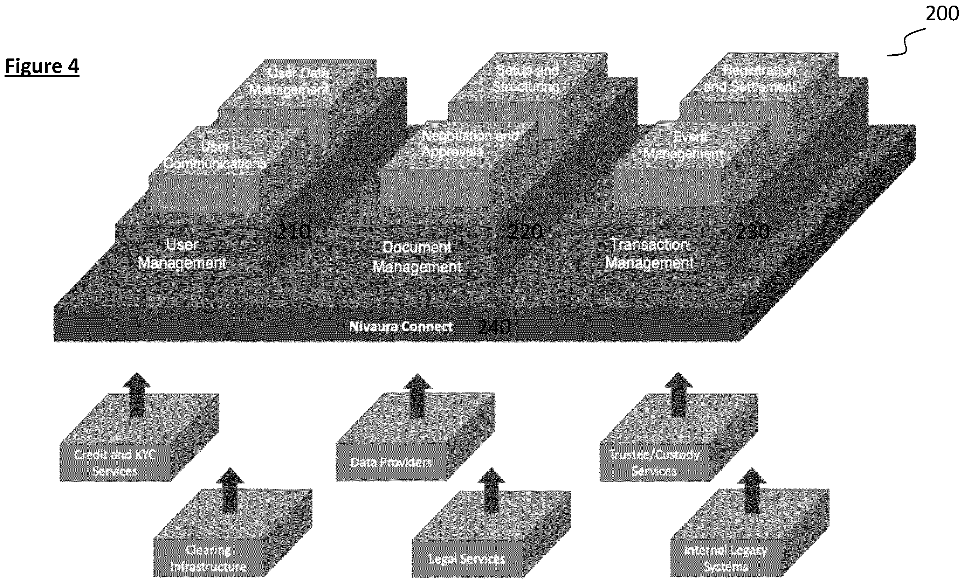

In the example shown in Figure 4, a system 200 has a User Management module 210, a Document Management module 220, a Transaction Management module 230 and a Connection module 240.

The User Management module 210 controls the setup of user onboarding, provides permissions/controls and manages alerts and communications. This module may also be used to manage data for instruments.

The Document Management module 220 includes a Product Manager submodule for setting up of instrument documents and enable workflow generation. The Document Management module 220 also includes a Product Workflow submodule for structuring, negotiation and signing of instrument generation.

The Transaction Management module 230 manages transaction flows, asset/money custody, events scheduling and triggers.

The Connection module 240 enables integration and messaging management with internal or external services through a single interface.

Advantageously, the methods and systems described above provide a flexible infrastructure and appropriate flexible data and application layers which, in turn, enable the development of customisable and intelligent workflows. The structured bottom-up approach of the present inventions enables the development of such adaptable and intelligent workflows in a fast and efficient manner.

### Interpretation

It will be appreciated that the order of performance of the steps in any of the embodiments in the present description is not essential, unless required by context or otherwise specified. Thus most steps may be performed in any order. In addition, any of the embodiments may include more or fewer steps than those disclosed.

Additionally, it will be appreciated that the term "comprising" and its grammatical variants must be interpreted inclusively, unless the context requires otherwise. That is, "comprising" should be interpreted as meaning "including but not limited to".

Moreover, the invention has been described in terms of various specific embodiments. However, it will be appreciated that these are only examples which are used to illustrate the invention without limitation to those specific embodiments. Consequently, modifications can be made to the described embodiments without departing from the scope of the invention.

## Claims

1. A computer-implemented method for execution flow generation, the method comprising the steps of:
providing a machine-readable input document;
reading the input document to detect a first plurality of parameters representing tag data;
structuring the tag data to provide structured data; and
converting the structured data into execution flow.

2. A method according to claim 1, wherein the machine-readable input document is a template document.

3. A method according to claim 1 or claim 2, wherein the step of reading the input document comprises using machine learning process.

4. A method according to any preceding claim, wherein the step of structuring the tag data comprises grouping the first plurality of parameters into a second plurality of parameters representing grouped tag data.

5. A method according to any preceding claim, wherein the step of structuring the tag data comprises a machine learning process and/or a heuristic process.

6. A method according to any preceding claims, wherein the step of structing the tag data comprises validating the structured data.

7. A method according to any preceding claims, the method further comprising the steps of: providing values for the first plurality of parameters and generating an output document using the generated execution flow.

8. A system, comprising:
a processor;
a memory in communication with the processor, the memory storing instructions which, when executed by the processor, cause the processor to perform the method of any of the preceding claims.

9. A system according to claim 8, wherein the system is an on-boarding system or a clearing system.
